# EUROPEAN PATENT APPLICATION

(11) **EP 1 566 777 A2**
(43) Date of publication of application: **24.08.2005**
(21) Application number: 05003428.9
(22) Date of filing: 17.02.2005
(51) Int. Cl.: G07F 17/32

(54) **Gaming machine**

(30) Priority: 19.02.2004 JP 2004042697
(71) Applicant: Aruze Corp., Tokyo 135-0063 (JP)
(72) Inventor: Sato, Osamu, Tokyo 135-0063 (JP)
(74) Representative: Grünecker, Kinkeldey, Stockmair & Schwanhäusser Anwaltssozietät

(57) **Abstract**

The present invention allows a player to advance a game by actually performing an indication over an image display means which constitutes a table screen using his/her hand. The gaming machine includes an image display means which displays an image relevant to the game, a position detecting means which detects a position indicated by the player's hand by scanning the whole indication reception region which receives an indication of the player and also is a region including a display region of the image display unit, and a control means which performs a control of the game based on the position detected by the position detecting means.

## Description

### CROSS-REFERENCES TO THE RELATED APPLICATIONS

This application is based upon and claims the priority from a prior Japanese patent application No. 2004-042697, filed on February 19, 2004, in Japan, entire contents of which are incorporated herein by reference.

This application is related to a co-pending U.S. patent application referred to as a prior Japanese patent application No. 2004-047114 filed in Japan on February 23, 2004, a prior Japanese patent application No. 2004-204651 filed in Japan on July 12, 2004 and a prior Japanese patent application No. 2004-244125 filed in Japan on August 24, 2004 and a co-pending U.S. patent application referred to as a prior Japanese patent application No. 2004-047166 filed in Japan on February 23, 2004 and a prior Japanese patent application No. 2004-111401 filed in Japan on April 5, 2004.

### BACKGROUND OF THE INVENTION

### 1. FIELD OF THE INVENTION

The present invention mainly relates to a gaming machine, and more particularly to a gaming machine which specifies a position of a player's hand and performs a control of a game based on the specified position.

### 2. RELATED ART

In an image display technique in which a document prepared on a PC (personal computer) is displayed as an image information on a screen using a liquid crystal projector for performing the explanation or the like to a large number of people, to facilitate the understanding of the audience, an explainer or an assistant of the explainer points out a description, a chart or an image relevant to the explanation in the image displayed on the screen using an indicator such as an indicating rod, a beam pointer or the like.

In such an indication, there may be a case in which it is necessary to detect which position the indicator points out. For example, there may be a case in which the explainer or the like wants to perform the indication of various image processing such as a highlight display or an enlarged display using the indicator as a trigger for supporting the understanding of the audience. Here, the highlight display is a display which changes the color of a sentence pointed out by the indicator and the enlarged display is a display which displays a chart in an enlarged manner.

As a technique which copes with such a demand, there has been proposed a technique in which an indicated position in an image region which constitutes an image surface displayed on a screen is photographed and the photographed image is subjected to edge processing to detect the indicated position (see Japanese Laid-Open Patent Publication 2001-273092 (Fig. 1, paragraphs [00028] to [0033])).

### SUMMARY OF THE INVENTION

However, when the above-mentioned position detection technique is applied to a gaming machine in which a game is performed by allowing a plurality of players to indicate positions on the same monitor (for example, roulette, baccarat or the like which uses a large-sized monitor), there has been a drawback that it is difficult to recognize which players are indicating and which positions the players are indicating.

Further, in the above-mentioned position detection technique, in a gaming machine which allows a plurality of players to perform a game by arbitrarily determining the number of bets, it is difficult to recognize or detect the number of bets which are betted to the positions which the players indicate.

Accordingly, it is an object of the present invention to provide a gaming machine which can overcome the above-mentioned drawbacks and can advance a game in a state that players are allowed to actually make indications using their hands on a table screen.

The present invention provides following features as constitutions to overcome the above-mentioned drawbacks.

The present invention proposes a gaming machine which specifies a position of a player's hand and performs a control of the game based on the specified position. The gaming machine includes an image displaymeans (a screen, a projector, a screen control part) which displays an image relevant to the game, a position detecting means (sensor) which detects a position indicated by the player's hand by scanning the whole indication reception region which receives an indication of the player which is a region including a display region of the image display means, and a control means (game control part) which performs a control of the game based on the position detected by the position detecting unit.

The image display means includes a function of displaying the image such as a liquid crystal display device, a CRT monitor or a screen, wherein the player can input the indication of the position by indicating a region in which an image is displayed, for example, a display surface of the liquid crystal display device using an indicator. A region which allows the inputting of position indication is referred to as "an indication reception region which receives the indication of the player". When the player indicates any position in the inside of the indication reception region, the position detecting means detects the position by scanning and transmits the detected position to the control means, and the control means performs a predetermined control, for example, the change of an image to be displayed based on the detected position.

According to the present invention, it is possible to advance the game while allowing the players to actually perform indication using their hands on the image display means which constitutes the table screen.

According to the present invention, it is possible to advance the game while allowing the players to actually perform the indication with their hands on the game table.

### BRIEF DESCRIPTION OF THE DRAWINGS

Fig. 1A is a view showing a basic constitutional example of an image display system;
Fig. 1B is a view showing another basic constitutional example of the image display system;
Fig. 2 is a perspective view of the appearance of a gaming machine which utilizes the image display system;
Fig. 3 is a view showing an arrangement example of an optical system which constitutes the image display system;
Fig. 4 is a block diagram showing an electrical constitutional example of the gaming machine;
Fig. 5 is a view showing an example of a screen displayed on a front monitor;
Fig. 6 is a view showing an example of a screen displayed on a transmissive screen of the gaming machine;
Fig. 7A is a plan view of the gaming machine showing a scanning region of a sensor;
Fig. 7B is a front view of the gaming machine showing the scanning region of the sensor;
Fig. 8 is a plan view of the gaming machine showing the scanning region of the sensor when players are specified;
Fig. 9 is a plan view of the gaming machine showing the scanning region of the sensor when players are specified; and
Fig. 10 is a flowchart showing an operational example of the gaming machine.

### DESCRIPTION OF THE PREFERRED EMBODIMENTS

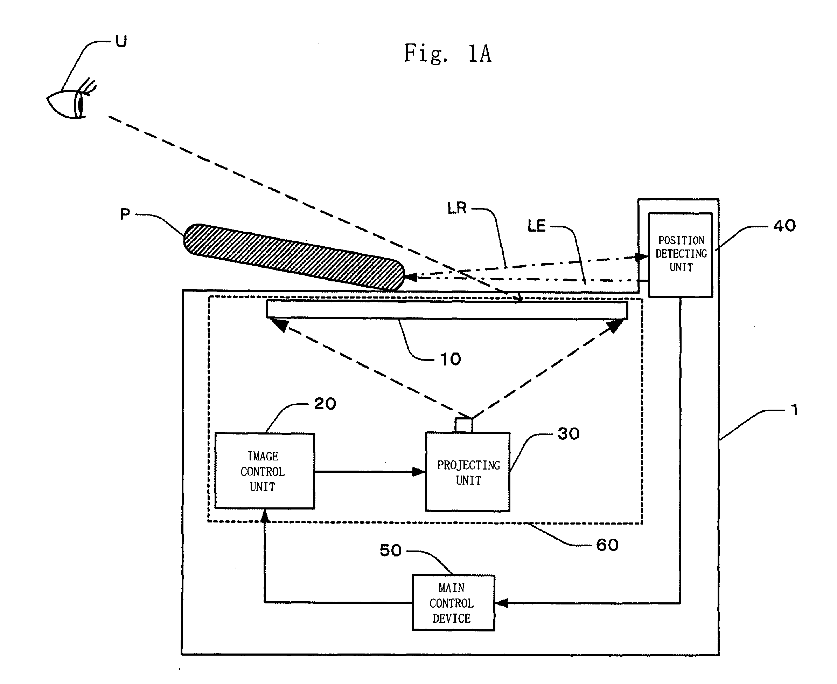

An embodiment of the present invention is explained in conjunction with drawings hereinafter. Fig. 1A is a view showing a basic constitutional example of an image display system capable of recognizing the indicated position according to the present invention.

An image display system 1 includes an image display unit 60 which is constituted of an screen unit 10, an image control unit 20 for supplying image data, a projecting unit 30 which projects an image to a front surface of the screen unit 10 based on the image data from the image control unit 20, a position detecting unit 40 which emits a light LE along a surface of the screen unit 10 and receives a reflection light LR which is reflected from an indicator P which is an object whose position is to be measured thus detecting the position of the indicator P, and an main control unit 50 which commands the image control unit 20 to project an image to be projected on the screen unit 10 based on the position information from the position detecting unit 40.

The screen unit 10 has the light transmitting characteristic and allows light from a back surface thereof to pass therethrough. The screen unit 10 is, for example, a light-transmitting screen for a liquid crystal projector. When a player U watches the screen unit 10 from the front surface of the screen unit 10, an optical image which is emitted from the projecting unit 30 from the back surface side of the screen unit 10 appears on the screen unit 10 as a focused image. As a result, the player U can watch the image which corresponds to the image data which the projecting unit 30 emits.

The indicator P is a tool or means with which the player U indicates a desired position of the image displayed on the front surface of the screen unit. For example, the indicator P may be a hand (including an arm) of the player U or an indication rod which is manipulated by his/her hand.

The projecting unit 30 is an optical projecting system which is capable of projecting an optical image to the screen unit 10 based on the image data and is a liquid crystal projector (DLP (Digital Liquid Projector)) or the like, for example.

The image control unit 20 and the main control unit 50 are constituted of a device which includes an arithmetic operation device (CPU), a main memory (RAM(Random Access Memory)), a read only memory (ROM), an input/output device (I/O) and an external storage device such as a hardware device or the like when necessary. The image control unit 20 and the main control unit 50 may be an information processing device such as a computer, a workstation, an LSI chip or the like, for example. In the above-mentioned ROM, the hard disk device or the like, a program which allows the information processing device to function as the image control unit 20, the position detecting unit 40 or the main control unit 50 is stored. By storing this program in the main memory and by allowing the CPU to execute the program, the image control unit 20 or the main control unit 50 is realized. Further, the above-mentioned program is not always stored in a storage device in the inside of the information processing device and may be configured such that the program is provided from an external device (for example, a server of an ASP (Application Service Provider)) and is stored in the main memory.

The image control unit 20 and the main control unit 50 may be constituted of individual information processing devices respectively or one information processing device may function as the image control unit 20 as well as the main control unit 50.

The image control unit 20 has a function of generating the image data to be projected by the projecting unit 30 in response to the command from the main control unit 50 and supplying the image data to the projecting unit 30.

The main control unit 50 has a function of controlling the operation of the whole image display system 1, instructs which image data is to be outputted and which timing the video data is to be outputted to the image control unit 20 and, at the same time, transmits a command which changes the image data to the image control unit 20 in response to the position information of the indicator P from the position detecting unit 40.

The position detecting unit 40 emits light having directivity (emitted light) LE along the surface of the screen unit 10 so as to scan the surface of the screen unit 10 and receives a reflection light LR which is a light obtained when the emitted light LE reflects on the indicator P and returns. The position detecting unit 40 obtains the direction and the distance of the indicator P with respect to the position detecting unit 40 based on the emitting direction of the emitted light and a light quantity of the reflection light LR and outputs the position information after obtaining the position of the indicator P based on these direction and distance.

This image display system 1 provides the image display technique which can detect the position which the player indicates using the indicator P and can change the image to be displayed by the screen unit 10 in accordance with the detected position. That is, the image display system 1 which is capable of recognizing the indicated position is a system which makes use of the screen unit 10 as the image display unit 60 and makes use of the screen unit 10 as an input unit which allows the player to input the position information.

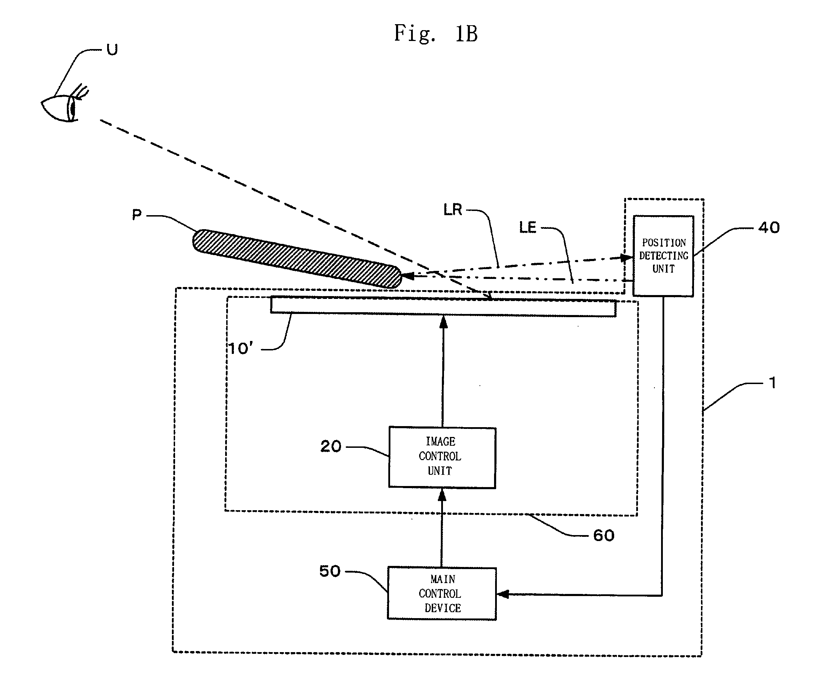

Fig. 1B is a block diagram showing another constitutional example of the image display system 1 which is capable of recognizing the indicated position. The image display system 1 of this example differs from the image display system 1 capable of recognizing the indicated position shown in Fig. 1A with respect to a point that the image display unit 60 is constituted of the video display unit 20 and a display unit 10' which displays an image in accordance with the image data supplied from the video display unit 20. However, the image display system 1 of this example is equal to the image display system 1 shown in Fig. 1A with respect to other points. That is, with the use of the constitution shown in Fig. 1B, it is also possible to constitute the system which is substantially equal to the image display system 1 which is capable of recognizing the indicated position as shown in Fig. 1A.

The image display system 1 capable of recognizing the indicated position has following advantages due to the above-mentioned constitutional features.

According to this system, it is possible to use the screen unit 10 or the display unit 10' also as the input unit and hence, the reduction of cost, the omission of parts and the simplifying of the structure can be realized. As a result, it is possible to provide the gaming machine which is capable of advancing the game while allowing the players to actually give indications using their hands on the table screen (the image display device which is also used as a game table which reproduces a table for a roulette or a card game).

Next, a specific embodiment of the present invention is explained.

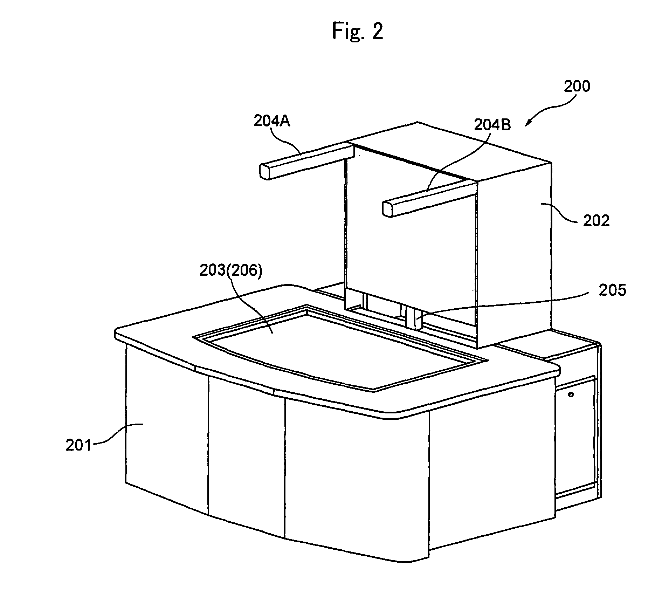

Fig. 2 is a perspective view showing an appearance of a gaming machine which makes use of the image display system 1 according to the present invention. Here, although the gaming machine is explained as a device which allows players to play a baccarat game, the gaming machine according to this embodiment is not limited to the baccarat game, and the present invention is applicable to any gaming machine provided that the gaming machine is for a game to which the image display system 1 according to the present invention is applicable such as porker, blackjack, bridge, roulette, soccer game, American football game, an RPG, an action game and the like.

The gaming machine 200 according to this embodiment includes a table part 201 and a front display part 202 which is mounted on a rear portion of the table part 201.

The table part 201 stores an optical system and an information processing equipment which constitute the image display system 1. An opening is formed in the center of an upper surface of the table part 201 and a transmissive screen 203 which constitutes an screen unit 10 is extended over the opening. The transmissive screen 203 functions as an upper surface display (also referred to as "table screen") which displays the game image to players. Here, an upper portion of the transmissive screen 203 is protected by a transparent plate member such as a glass panel and hence, even when the player touches the upper surface display with his/her finger which constitutes the indicator P, there is no possibility that the transmissive screen 203 is broken or smeared.

On both ends of an upper portion of the front display part 202, fluorescent lamps 204A, 204B are provided. Here, the arrangement positions of the fluorescent lamps 204A, 204B are not always limited to a mode shown in Fig. 2 and the fluorescent lamps 204A, 204B may be arranged at any positions. Further, provided that a sufficient illumination is ensured at a site where the gaming machine 200 is arranged, the fluorescent lamps 204A, 204B may not be provided.

On a lower side of the center of the front display part 202, a sensor 205 which constitutes the position detecting unit 40 is provided. The sensor 205 may be an obstacle detection photoelectric sensor (product of Hokuyo Denki Kabushiki Kaisha (Osaka, Japan), PB9 series), a laser sensor or the like. The sensor 205 is not limited to the above-mentioned arrangement position and may be arranged at a position where the sensor 205 emits a scanning light along the surface of the transmissive screen 203 which constitutes the table screen and can scan the position above the transmissive screen 203.

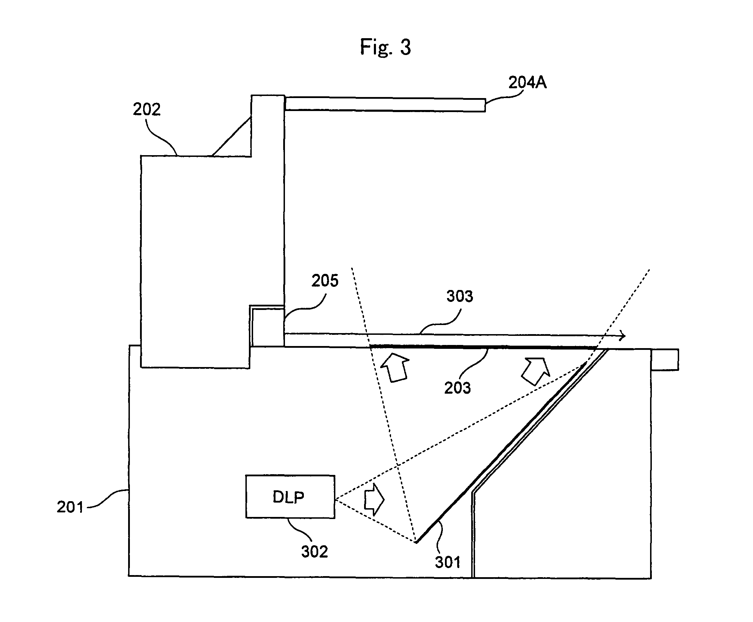

Fig. 3 shows an arrangement example of an optical system which constitutes the image display system 1 stored in the inside of the table part 201.

To a center portion of the table part 201, the transmissive screen 203 is fixed in a state that the transmissive screen 203 is protected by a glass plate or the like. Below the transmissive screen 203, a mirror 301 is arranged in an inclined state. At a position which faces the mirror 301 in an opposed manner, a digital liquid crystal projector (hereinafter referred to as "DLP") 301 which corresponds to the projecting unit 30 is fixed. The mirror 301 reflects the image emitted from the DNP 302 toward the transmissive screen 203, wherein the distance between the mirror 301 and the DLP 302 and an angle of the reflection surface are adjusted so as to project the image at a given size.

Further, on an upper surface of the table part 201, a sensor 205 is arranged so as to scan a position above the light transmitting screen 203 using the scanning light 304.

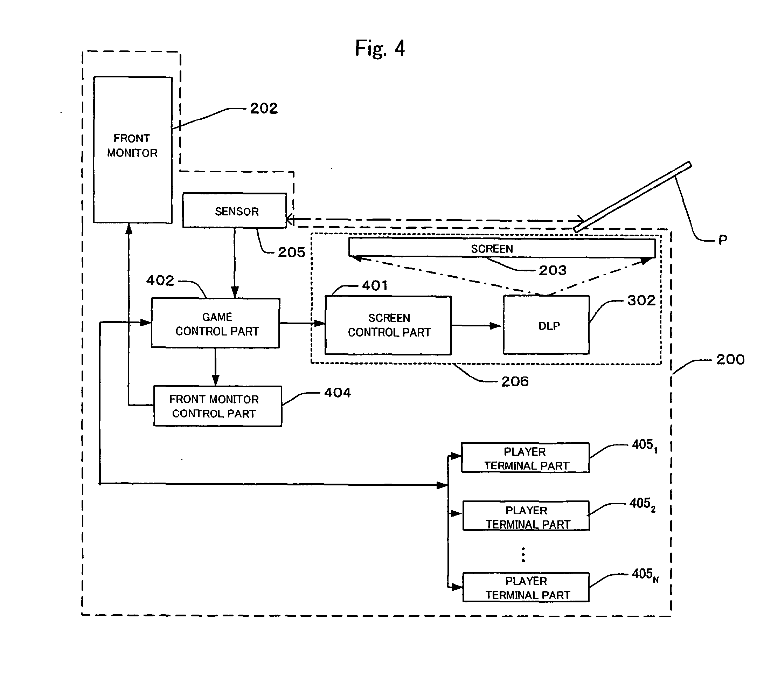

Next, an electric constitutional example of the gaming machine 200 is explained. Fig. 4 is a block diagram showing the electric constitutional example of the gaming machine 200.

As shown in Fig. 4, the transmissive screen 203 is formed on the gaming machine 200. The DLP 302 which constitutes the projecting unit 30 optically projects the image relevant to the game to the transmissive screen 203. The screen control part 401 which constitutes the image control unit 20 supplies the image data (hereinafter referred to as "monitor image data") to the DLP 302. The transmissive screen 203, the screen control part 401 and the DLP constitute the table screen 206 which constitutes the image display unit 60. The sensor 205 which constitutes the position detecting unit 40 detects the position indicated by the indicator P and outputs the position information. The game control part 402 which constitutes the main control unit 50 has a function of controlling operations of the gaming machine 200 and instructs the image data to be outputted and the timing of outputting the image data to the screen control part 401. At the same time, the game control part 402 receives the position information from the sensor 205 and controls the operation of the gaming machine 200 based on the positional information.

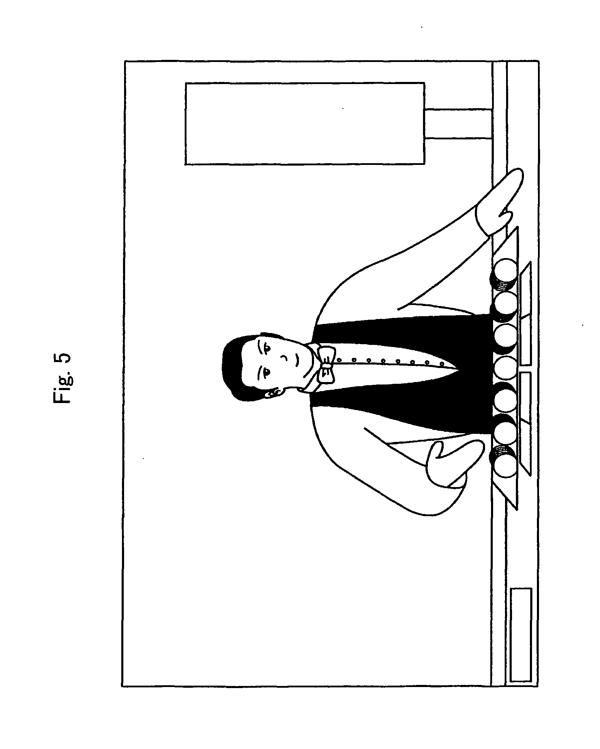

The front monitor control part 404 outputs image data of the image to be displayed on the front monitor 202 (hereinafter referred to as "front image data") in response to the instruction from the game control part 402. The front monitor 202 receives and displays the front image data. The image displayed on the front monitor 202 informs, in cooperation with the image displayed on the transmissive screen 203, the situation, the progress and the like of the game to the players. In this example, a dealer of a baccarat is displayed as a moving image. Fig. 5 is a screen example displayed on the front monitor 202. On the screen, the dealer is displayed. That is, the mode in which the dealer distributes cards, draws cards and delivers chips in accordance with the progress of the game is displayed on the screen and hence, it is possible to obtain an effect as if the player is actually playing the baccarat with an actual dealer.

The image displayed on the front monitor 202 may be controlled based on the positional information detected by the sensor 205. For example, the dealer who is displayed on the front monitor 202 may be displayed in a state that the directions of his/her face and body are changed in accordance with the positional information so that the dealer face the position in an opposing manner.

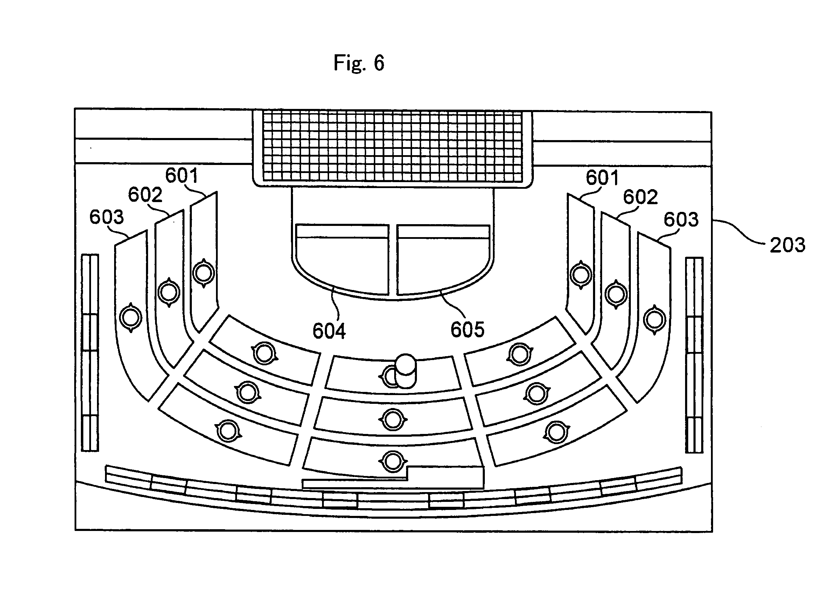

Next, a screen example displayed on the table screen 206 is explained. Fig. 6 is a screen example displayed on the table screen 206 of the gaming machine 200. In this example, an image which imitates a baccarat table is displayed on the table screen 206. On the baccarat table illustrated in the example, regions 601, 602, 603 for betting to "BANKER", "PLAYER", "DRAW" are displayed for five respective players. By allowing the player to indicate any one of the regions 601, 602, 603 using his/her hand which constitutes the indicator P or the like, the information on which one of the "BANKER", "PLAYER", "DRAW" the player bets is inputted to the gaming machine 200.

Here, the number of chips, an amount of money and the number of credits for betting can be decided by the player using a betting button of a player terminal part 405 described later. A pile of chips which each player possesses can be also displayed on the table screen 206. When the player instructs his/her betting to anyone of the "BANKER" , "PLAYER" , "DRAW" using the indicator P, the image is changed to allow the table screen 206 to perform the display in which the number of chips which are bet are moved to any one of the regions 601, 602, 603 which are designated by the indicator P from a pile of chips in front of the player.

Further, the table screen 206 includes regions 604, 605 to which the dealer distributes cards of BANKDER and PLAYER and images of cards are displayed on these regions 604, 605.

Returning back to Fig. 4, the electrical constitutional example of the gaming machine 200 is further explained.

To the game control part 402, a plurality of player terminal parts 405₁ to 405_{N} are connected. Each player terminal part 405 is a terminal which receives coins, bills, prepaid cards, credit cards or the like and changes them to credits (coins/medals) which can be used in the gaming machine 200. The player terminal part 405 also has a bill validation function of paying out the credits which the player terminal part 405 possesses in response to the payout indication from the player at a point of time that the payout indication is made and a bet inputting function for determining the number of bets, an amount of money and the number of credits. The player performs the game using this player terminal part 405 and the indicator P.

Next, the processing which detects a certain position on the table screen 206 indicated by the player's hand which constitutes the indicator P is explained.

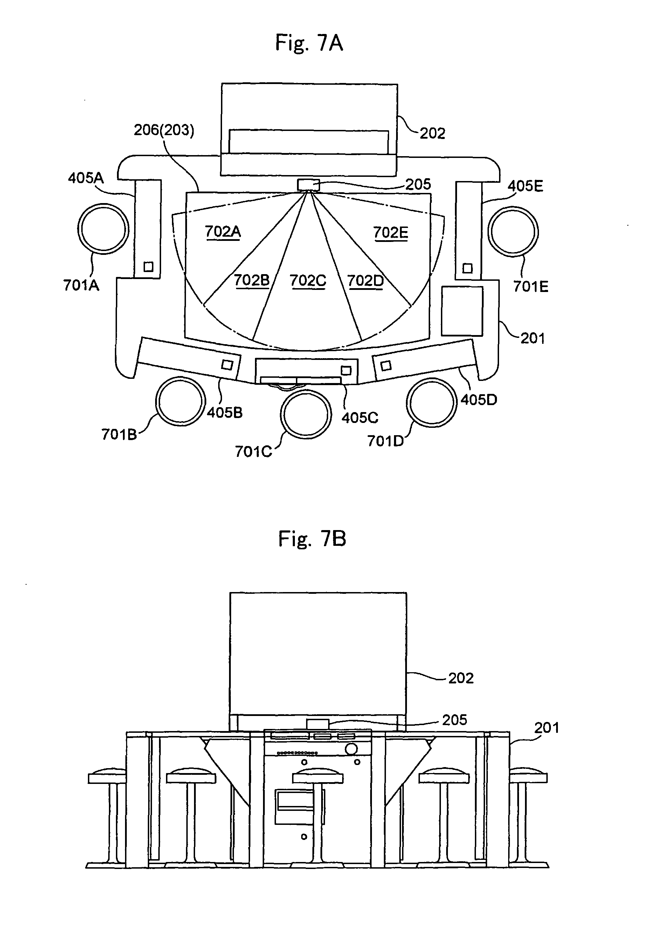

Fig. 7A is a plan view as viewed from above the gaming machine 200 and shows a state that the sensor 205 which is mounted on the gaming machine 200 scans over the table screen 206, while Fig. 7B is a front view of the gaming machine 200 which corresponds to Fig. 7A.

The sensor 205 emits the scanning light such that the scanning light passes over the table screen 206. The sensor 205 rotates the scanning light from the right to the left or from the left to the right about the sensor 205 so as to scan the whole region above the table screen 206. For example, the sensor 205 repeats the emitting of the scanning light and the reception of the reflection light by rotating the emitting direction of the scanning light at intervals of 0.5 degrees.

In this embodiment, based on the positional detection performed by the sensor 205, it is also possible to determine who instructs the position among the players. In the gaming machine 200, stools 710A to 701E on which five players at maximum can sit are provided and regions that the respective player's hands can reach are limited. In front of the sitting positions of the respective players, the player terminal parts 405A to 405E which are incorporated into the table part 201 are provided. Each one of the player terminal parts 405A to 405E includes a bet button, a cancel button, a payout button (not shown in the drawing) and the like and receives the input instruction from the player.

Respective regions 702A to 702E which are shown in Fig. 7A are regions which the respective player's hand can reach. For example, the region 702A is a region which the hand of the player who makes use of the stool 701A can reach. When the position above the table screen 203 which is in the inside of the region 702A is indicated, the sensor 205 determines that the position is the position which is indicated by the player who makes use of the stool 701A. The sensor 205 determines the region in which the positional detection is performed among the regions 702A to 702E based on the emitting direction of the scanning light, determines the indication as the positional indication made by the player corresponding to the region, and transmits the information identifying the player corresponding to the positional information (for example, player number) to the game control part 402.

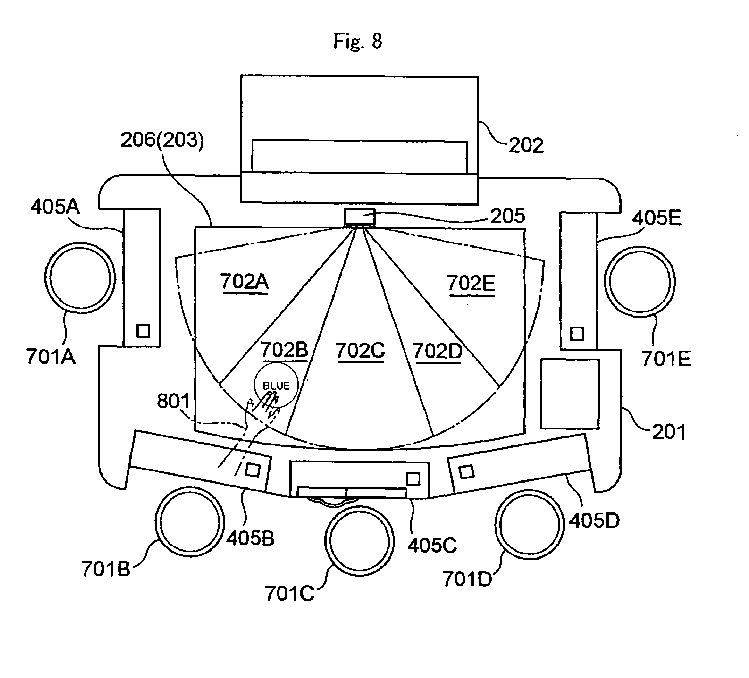

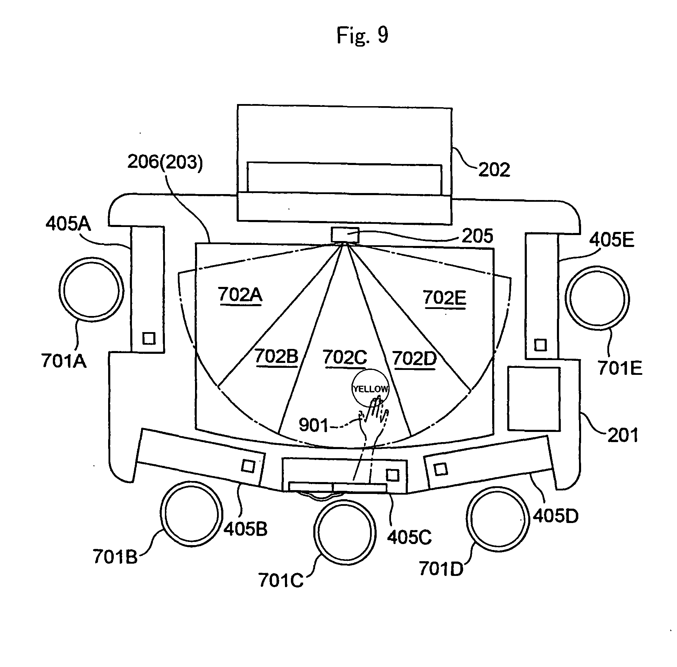

Fig. 8 shows a state in which player indicates the position in the region 702B. The player indicates the position in the inside of the region 702B on the table screen 206 using his/her hand 801 which constitutes the indicator P. The sensor 205 determines, based on the fact that the indicated position is in the inside of the region 702B, that the indicated position is attributed to the player (the player who sits on the stool 701B and makes use of the player terminal part 405B). Fig. 9 shows a state in which the player indicates the position in the region 702C. The player indicates a certain position in the inside of the region 702C on the table screen 206 using his/her hand 901 which constitutes the indicator P. The sensor 205 determines, based on the fact that the indicated position is in the inside of the region 702C, that the indicated position is attributed to the player (the player who sits on the stool 701C and makes use of the player terminal part 405C).

According to this method, the colors (for example, red, blue, yellow, green, white) of chips which the respective players use can be respectively determined and, based on the detected positional information, these colors can be displayed at places on the table screen 206 which the positional information indicate.

Here, in this embodiment, the explanation is made with respect to the constitution in which the whole region on the table screen 206 is scanned by one sensor 205. However, the present invention is established even when a plurality of sensors 205 are provided and the respective sensors 205 are allowed to scan the respectively allocated regions on the table screen 206. For example, two sensors 205 are provided, wherein one sensor 205 is allocated to the right half region of the table screen 206 and the other sensor 205 is allocated to the left half region of the table screen 206.

According to the above-mentioned position detecting method, even when the plurality of players indicate the positions on the table screen 206 simultaneously, it is possible to recognize the players corresponding to the respective indicated positions.

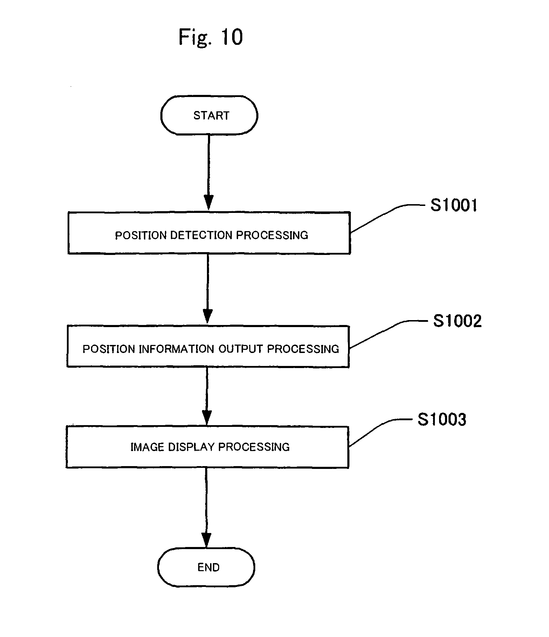

Fig. 10 is a flow chart showing one example of position detecting processing which performs the position detection of the indicator P using the sensor 205.

First of all, the sensor 205 performs the position detection processing (step S1001). The sensor 205 performs scanning above the table screen 206 using the scanning light, determines whether the reflection of the scanning light exists or not, measures the intensity and the light quantity of the reflection light when the reflection of the scanning light exists, and performs the calculation of position by specifying the direction and the distance.

Next, the sensor 205 outputs the calculated position as the positional information (for example, xy coordinates value) (step S 1002). The sensor 205 may output the player identification information (for example, the player number) corresponding to the positional information together with the positional information.

The positional information is transferred to the game control part 402. The game control part 402 determines the kind of image to be displayed on the table screen 206 and/or the front monitor 202 based on the received positional information and allows the table screen 206 and/or the front monitor 202 to perform the image display processing (step 1003). For example, the positional information is determined as the designation of any one of regions 601, 602, 603 for betting to "BANKER", "PLAYER", "DRAW" and, thereafter, the screen control part 401 is instructed to display the designated chip image to the inside of the region, whereby the screen control part 401 generates the image data in response to the instruction.

As described above, it is possible to realize the gaming machine 200 which makes use of the table screen 206 as the image display unit which also functions as the input unit.

The present invention is not limited to the gaming machine and is applicable to all devices and systems which perform the reception of inputting of the players by making use of the image display and the displayed image such as the image display system for presentation, the demonstration device for promoting sales and the like.

## Claims

1. A gaming machine which specifies the position of a player's hand and performs a control of a game based on the specified position, the gaming machine comprising:
an image display means which displays an image relevant to the game;
a position detecting means which detects a position indicated by a player by scanning a whole indication reception region which receives an indication of the player, the indication reception region being a region including a display region of the image display means; and
a control means which performs a control of the game based on the position detected by the position detecting means.

2. A gaming machine according to claim 1, wherein the image display means displays a given image on the position detected by the position detecting means.

3. A gaming machine according to claim 1 or 2, wherein the gaming machine includes a second image display means separately from the image display means, and the second image display means displays a movement of a character based on the detected position.

4. A gaming machine according to any one of claims 1 to 3, wherein the gaming machine further includes a player terminal means which receives the input number of bets from the player, and the image display means displays an image corresponding to the number of bets at the position which is detected by the position detecting means.

5. A method for controlling a gaming machine which specifies the position of a player's hand and performs a control of a game based on the specified position, the method comprising the following steps of:
displaying an image relevant to the game using an image display means;
detecting a position indicated on the image display means by scanning a whole indication reception region which receives an indication of the player using an indicator; and
performing a control of the game based on the detected position.
